Europäisches Patentamt

**European Patent Office**

**Office européen des brevets**

(19)

(11) Publication number: **0 348 521**
**A1**

(12)

# EUROPEAN PATENT APPLICATION

published in accordance with Art. 158(3) EPC

(21) Application number: **89900320.6**

(22) Date of filing: **13.12.88**

Data of the international application taken as a basis:

(86) International application number:
**PCT/JP 88/01259**

(87) International publication number:
**WO 89/06015 (29.06.89 89/14)**

(51) Int. Cl.⁴: **G 06 F 15/60**

(30) Priority: **15.12.87 JP 3167/87**

(43) Date of publication of application: **03.01.90**
**Bulletin 90/1**

(84) Designated Contracting States: **DE FR GB IT**

(71) Applicant: **FANUC LTD, 3580, Shibokusa Aza-Komanba Oshino-mura, Minamitsuru-gun Yamanashi 401-05 (JP)**

(72) Inventor: **SEKI, Masaki, 3-15-2-406, Takaido-nishi, Suginami-ku Tokyo 168 (JP)**
Inventor: **TAKEGAHARA, Takashi, 256-2, Nishiterakata-cho, Hachioji-shi Tokyo 192-01 (JP)**
Inventor: **MATSUNAKA, Toru F. Manshon Harimomi 8-305, 3511-1, Shibokusa Oshino-mura, Minamitsuru-gun Yamanashi 401-05 (JP)**

(74) Representative: **Billington, Lawrence Emlyn et al, HASELTINE LAKE & CO Hazlitt House 28 Southampton Buildings Chancery Lane, London WC2A 1AT (GB)**

(54) **MULTI-PLANE DRAWING METHOD.**

(57) When a work coordinate system origin (R) of an object of drawing (IMO) and the dimension of each portion are inputted, a scale S for drawing a multi-plane figure (A', B', C') on the full display screen is calculated on the basis of the maximum width (d, w, h) of the object in each axial direction and the size ($L_x$, $L_y$) of a display screen (DSP). Then, the coordinate values of the projection origin ($R_1 \sim R_3$) obtained by projecting the origin (R) onto each plane in the drawing coordinate system are calculated by use of the scale S and the dimensional data and the multi-plane figure is fully drawn on the display screen (DS) by use of these coordinate values and scale S.

(a)

(b)

-1-

## DESCRIPTION

## MULTIPLE-VIEW DISPLAY METHOD

### Technical Field

This invention relates to a method of displaying multiple views and, more particularly, to a multiple-view display method for fully displaying, in a designated area of a display screen, such multiple views as a plan view, front view and side view of a tool path, part profile or the like obtained by automatic programming.

### Background Art

When one view of an object such as a tool path or part profile is displayed on a CRT screen or the like, the position of the origin on the display screen and the scale are designated in conformity with the object. When multiple views of the object are displayed on a single display screen, scale and origin are designated with regard to each view to display the multiple views.

However, in a situation where views (figures) are not independent but related to one another, as in the case of multiple views, deciding the scale and the origin of each view so as to display these views in full on a display screen is not easy.

Accordingly, an object of the present invention is to provide a multiple-view display method through which scale and view display position for displaying multiple views on a display screen in full can be decided and displayed automatically.

-2-

Disclosure of the Invention

The invention provides a multiple-view display method for displaying, in full size, multiple views of an object in a designated area of a display screen, the method comprising a step of specifying an origin position and shape of the object, a step of calculating scale for displaying multiple views in full in the designated area based on a maximum spacing of the object along each axis and a size of the designated area on the display screen, a step of calculating coordinates, in a display coordinate system, of each of projected origins obtained by projecting the abovementioned origin onto each plane, and a step of displaying the multiple views on the display screen using the scale and the coordinates of each of the projected origins in the display coordinate system.

In accordance with this multiple-view display method, scale and view display position for displaying multiple views in full on a display screeen can be decided and displayed automatically.

Brief Description of the Drawings

Fig. 1 is a block diagram illustrating a graphic display system for implementing the multiple-view display of the present invention;

Fig. 2 is a view for describing the multiple-view display method of the invention; and

Fig. 3 is a flowchart of multiple-view display processing according to the invention.

<u>Best Mode for Carrying Out the Invention</u>

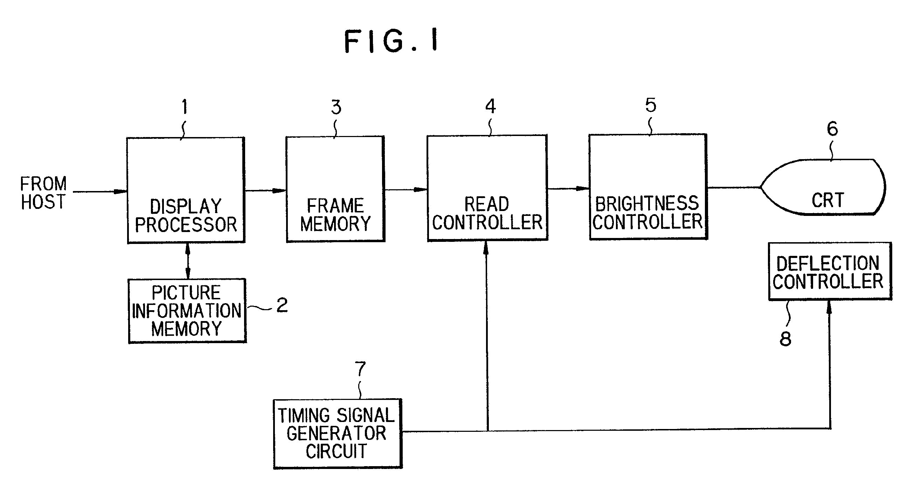

Fig. 1 is a block diagram illustrating a graphic display system for executing the multiple-view display method of the present invention. Numeral 1 denotes a display processor constituted by a microcomputer, 2 a picture information memory for storing picture information inputted from a host device, 3 a frame memory for storing one frame of an image, 4 a read controller for reading out an image from the frame memory, 5 a brightness controller, 6 a CRT, 7 a timing signal generator for generating a horizontal synchronizing signal, a vertical synchronizing signal and timing signals such as a bit clock signal, and 8 a deflection controller for scanning a beam in horizontal and vertical directions.

The arrangement is such that the display screen of the CRT 6 has m x n pixels, the frame memory 3 has one storage area to correspond to each pixel of the CRT, and the storage area stores pixel color data or luminance data.

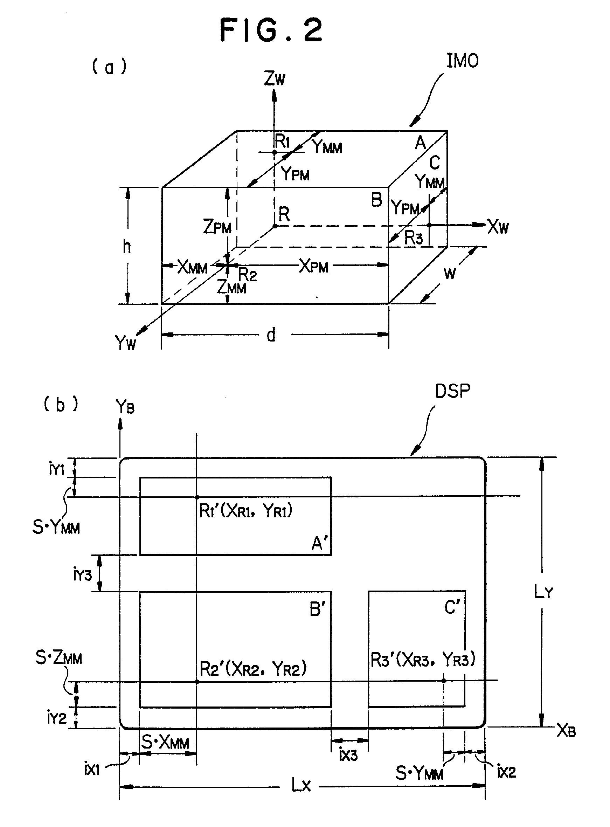

Fig. 2 is a view for describing the multiple-screen display method of the present invention, in which (a) is a perspective view of an object displayed and (b) shows an example of a multiple-view display.

IMO represents an object displayed. To facilitate the description, the object is one having a simple shape (a rectangular parallelepiped). Here $X_W - Y_W - Z_W$ represents a workpiece coordinate system, and R

-4-

denotes the origin of the workpiece coordinate system of the object IMO. The shape (dimensions) of the object is given based on the origin. A through C represent plan, front and side surfaces of the object, DSP a display screen, and $X_B$ - $Y_B$ a display coordinate system preset for the display screen. Further, A' denotes a plan view, B' a front view and C' a side view. $R_1$ through $R_3$ represent projected origins obtained by projecting the origin R onto the surfaces A through C of the object, and $R_1$' through $R_3$' denote points which are the projected origins $R_1$ - $R_3$ on the display screen.

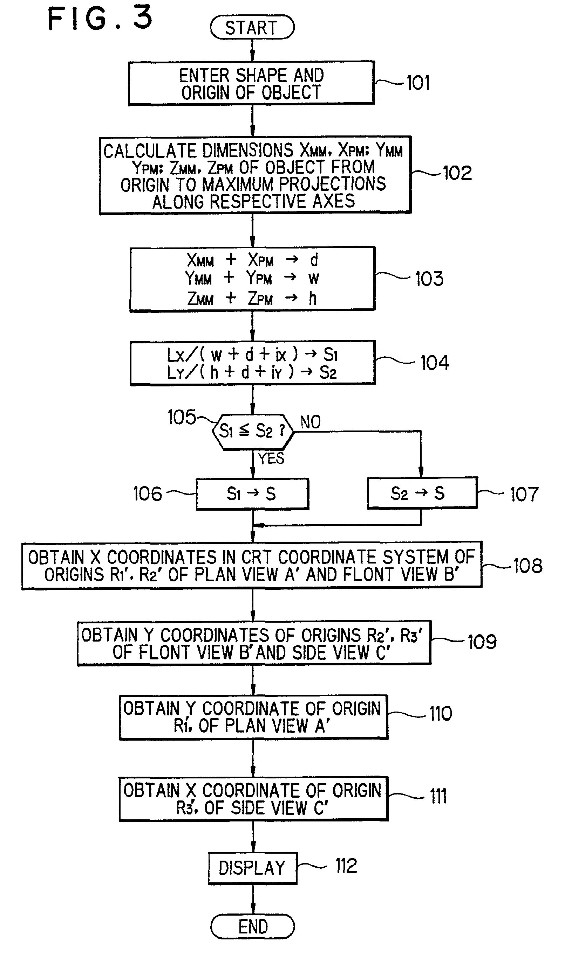

Fig. 3 is a flowchart of processing according to the invention. The multiple-view display method of hte invention will now be described in accordance with Figs. 1 through 3.

First, the position of the origin R in the workpiece coordinate system $X_W$ - $Y_W$ - $Z_W$ and data indicative of the shape (dimensions) of the object IMO expressed on the basis of the workpiece coordinate system are fed into the display processor 1 from the host device or the like, not shown (step 101). These origin and dimension data are stored in the picture information memory 2.

Using the data indicating the shape of the object IMO, the display processor 1 calculates axial lengths $X_{MM}$, $X_{PM}$; $Y_{MM}$, $Y_{PM}$; $Z_{MM}$, $Z_{PM}$ up to the maximum projecting points along the respective axes in the +

-5-

and - directions (step 102).

Next, maximum widths d, w, h of the object along the respective axes are calculated in accordance with the following equations (step 103):

$$X_{MM} + X_{PM} \longrightarrow d$$
$$Y_{MM} + Y_{PM} \longrightarrow w$$
$$Z_{MM} + Z_{PM} \longrightarrow h$$

When the maximum widths along the respective axes have been found, scales $S_1$, $S_2$ along the respective axes of the display coordinate system $X_B$ - $Y_B$ are calculated in accordance with the following equations (step 104):

$$L_X/(d+w+i_X) \longrightarrow S_1$$
$$L_Y/(h+w+i_Y) \longrightarrow S_2$$

In the above equations, $i_X$ is a constant value determined upon considering spacing $iX_3$ [see Fig. 1(b)] between the front view B' and side view C' on the display screen DSP as well as spacings $i_{X1}$, $i_{X2}$ between the edge of the CRT and the front view B' and side view C', respectively, and $i_Y$ is a constant value determined upon considering spacing $iY_3$ between the plan view A' and front view B' on the display screen DSP as well as spacings $i_{Y1}$, $i_{Y2}$ between the edge of the CRT and the plan view A' and front view B', respectively.

When the scales $S_1$, $S_2$ along the respective axes of the display coordinate system have been found, the smaller scale is adopted as the display scale S of the multiple views (steps 105 - 107).

When the display scale S has been found, $X_R$ given by the equation

$$i_{X1} + S \cdot X_{MM} \longrightarrow X_R$$

is adopted as the X coordinates $X_{R1}$, $X_{R2}$ of the origins $R_1{}'$, $R_2{}'$ of the plan view A' and front view B', respectively (step 108).

Next, $Y_R$ given by the equation

$$i_{Y2} + S \cdot Z_{MM} \longrightarrow Y_R$$

is adopted as the Y coordinates $Y_{R1}$, $Y_{R2}$ of the origins $R_2{}'$, $R_3{}'$ of the front view B' and side view C', respectively (step 109).

Thereafter, $Y_{R1}$ given by the equation

$$L_Y - (i_{Y1} + S \cdot Y_{MM}) \longrightarrow Y_{R1}$$

is adopted as the Y coordinate of the origin $R_1{}'$ of the plan view A' (step 110).

Similarly, $X_{R3}$ given by the equation

$$L_X - (i_{X2} + S \cdot Y_{MM}) \longrightarrow X_{R3}$$

is adopted as the X coordinate of the origin $R_3{}'$ of the side view C' (step 111).

When the positions of the projected origins $R_1$ - $R_3$ on the display screen, namely the coordinates $(X_{R1}, Y_{R1})$, $(X_{R2}, Y_{R2})$, $(X_{R3}, Y_{R3})$ of the origins $R_1{}'$ - $R_3{}'$ of the respective views in the display coordinate system, have been computed through the foregoing processing, it is arranged so that the projected origins $R_1$ - $R_3$ are situated at these positions, and each view is displayed upon being multiplied by S (step 112).

-7-

Amounts of shift along respective axes for bringing the projected origins $R_1$ - $R_3$ of the plan, front and side views into coincidence with the respective points $R_1'$ - $R_3'$ on the display screen are $X_{Ri}$, $Y_{Ri}$ (i = 1 - 3). Therefore, shape data x, y along the respective axes are transformed into x', y' by the following formula:

$$\begin{pmatrix} S \cdot x + X_{Ri} \\ S \cdot y + Y_{Ri} \end{pmatrix} \longrightarrow \begin{pmatrix} x' \\ y' \end{pmatrix}$$

an image is generated based on (x',y') obtained by this transformation, and the image is written in the frame memory 3. The stored information subsequently is read out of the frame memory 3 in synchronization with deflection of the beam of CRT 6 (this is referred to as raster scanning), brightness modulation is performed using the stored information and the multiple views are displayed to take up the full screen of the CRT 6. It should be noted that the timing signal generator 7 outputs a timing signal for reading the stored information out of the frame memory 3 and a timing signal for deflecting the beam. Based on the timing signal, the read controller 4 reads the stored information out of the frame memory 3 and applies it to the brightness controller 5. The latter performs brightness modulation based on the stored information. The deflection controller 8 deflects the beam horizonally and vertically in synchronization with the stored information.

-8-

Though the invention has been described above for a case where multiple views are displayed in full on a CRT screen, an arrangement can also be adopted in which a display area is designated separately and multiple views are displayed in this storage area.

In accordance with the present invention as set forth above, it is arranged to calculate a scale for displaying multiple views on a screen in full based on the dimensions of an object displayed and the size of a display area, calculate the coordinates in a display coordinate system of projected origins obtained by projecting the origin of the object onto each of its surfaces, and display the multiple views on the display screen using the scale and the coordinates of each projected origin. Accordingly, the scale for displaying the multiple views on the display screen in full and the display position of each view can be decided and displayed automatically, so that it is unnecessary to manually calculate scale and the positions of the projected origins.

CLAIMS:

1. A multiple-view display method for displaying, in full, multiple views of an object, which is specified in a workpiece coordinate system, within a designated area of a display screen for which a display coordinate system has been preset, characterized by comprising:

a step of inputting an origin position of the workpiece coordinate system and shape of the object expressed in the workpiece coordinate system;

a step of calculating scale for displaying multiple views in full in the designated area based on a maximum spacing of the object along each axis and a size of said designated area;

a step of calculating coordinates, in said display coordinate system, of each of projected origins obtained by projecting said origin onto each plane; and

a step of displaying the multiple views of the object on the display screen using the scale and the coordinates of each of the projected origins in the display coordinate system.

2. A multiple-view display method according to claim 1, characterized in that when a plan view, front view and side view of the object are displayed in full in said designated area, the smaller of

$$L_X/(d+w+i_X)$$
$$L_Y/(h+w+i_Y)$$

is adopted as said scale, where d, w, h represent the maximum spacings of the object along X, Y and Z axes,

-10-

$i_X$ represents the sum of spacing between views along the X axis and lengths of blank portions at left and right edges of said designated area, $i_Y$ represents the sum of spacing between views along the Y axis and lengths of blank portions at upper and lower edges of said designated area, and $L_X$, $L_Y$ represent lengths of the designated area along the X and Y axes.

3. A multiple-view display method according to claim 1, characterized in that the coordinates of said projected origins in the display coordinate system are calculated using distances from the origin position of said object to maximum projecting points along the respective axes in positive and negative directions, said scale and lengths of blank portions at upper, lower, left and right edges of said designated area.

4. A multiple-view display method according to claim 3, characterized by subjecting data indicative of the shape of each view to translation and an enlarging coordinate transformation conforming to the scale upon regarding X and Y coordinates of said projected origins in the display coordinate system as amounts of shift along the respective axes, and displaying each view based on the shape data obtained.

# FIG. 1

0 348 521

# FIG. 2

( a )

( b )

# FIG.3

```
( START )
      │
      ▼
┌──────────────────────────┐
│   ENTER SHAPE AND        │──── 101
│   ORIGIN OF OBJECT       │
└──────────────────────────┘
      │
      ▼
┌──────────────────────────────────┐
│ CALCULATE DIMENSIONS XMM, XPM;    │
│ YMM YPM; ZMM, ZPM OF OBJECT FROM  │──── 102
│ ORIGIN TO MAXIMUM PROJECTIONS     │
│ ALONG RESPECTIVE AXES             │
└──────────────────────────────────┘
      │
      ▼
┌──────────────────────────┐
│   XMM + XPM → d           │
│   YMM + YPM → w           │──── 103
│   ZMM + ZPM → h           │
└──────────────────────────┘
      │
      ▼
┌──────────────────────────┐
│   Lx/( w + d + ix ) → S1  │──── 104
│   Ly/( h + d + iy ) → S2  │
└──────────────────────────┘
      │
      ▼
    105  < S1 ≦ S2 ? > ──NO──┐
           │                 │
          YES                │
           ▼                 ▼
106 ─┌──────────┐      ┌──────────┐── 107
     │  S1 → S  │      │  S2 → S  │
     └──────────┘      └──────────┘
           │                 │
           └────────┬────────┘
                    ▼
┌────────────────────────────────────────────────┐
│ OBTAIN X COORDINATES IN CRT COORDINATE SYSTEM OF │── 108
│ ORIGINS R1', R2' OF PLAN VIEW A' AND FLONT VIEW B'│
└────────────────────────────────────────────────┘
                    │
                    ▼
┌────────────────────────────────────────────────┐
│ OBTAIN Y COORDINATES OF ORIGINS R2', R3'        │── 109
│ OF FLONT VIEW B' AND SIDE VIEW C'               │
└────────────────────────────────────────────────┘
                    │
                    ▼
┌────────────────────────────────────────┐
│ OBTAIN Y COORDINATE OF ORIGIN          │── 110
│ R1' OF PLAN VIEW A'                     │
└────────────────────────────────────────┘
                    │
                    ▼
┌────────────────────────────────────────┐
│ OBTAIN X COORDINATE OF ORIGIN          │── 111
│ R3' OF SIDE VIEW C'                     │
└────────────────────────────────────────┘
                    │
                    ▼
              ┌───────────┐
              │ DISPLAY   │── 112
              └───────────┘
                    │
                    ▼
                ( END )
```

**0 348 521**

# INTERNATIONAL SEARCH REPORT

International Application No  PCT/JP88/01259

## I. CLASSIFICATION OF SUBJECT MATTER (if several classification symbols apply, indicate all) 6

According to International Patent Classification (IPC) or to both National Classification and IPC

Int.Cl$^4$     G06F15/60

## II. FIELDS SEARCHED

| Minimum Documentation Searched 7 | |
|---|---|
| Classification System | Classification Symbols |
| IPC | G06F15/60 |

Documentation Searched other than Minimum Documentation
to the Extent that such Documents are Included in the Fields Searched 8

| | | |
|---|---|---|
| Jitsuyo Shinan Koho | 1972 | 1987 |
| Kokai Jitsuyo Shinan Koho | 1972 | 1987 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 61-170866 (Oki Electric Industry Co., Ltd.) 1 August 1986 (01. 08. 86) (Family: none) | 1-4 |
| Y | JP, A, 62-210581 (Oki Electric Industry Co., Ltd.) 16 September 1987 (16. 09. 87) (Family: none) | 1-4 |

\* Special categories of cited documents: 10

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search | Date of Mailing of this International Search Report |
|---|---|
| March 3, 1989 (03. 03. 89) | March 20, 1989 (20. 03. 89) |
| International Searching Authority | Signature of Authorized Officer |
| Japanese Patent Office | |

Form PCT/ISA/210 (second sheet) (January 1985)